# FASCICULE DE BREVET EUROPEEN

(11) **EP 4 570 049 B1**
(45) Date de publication et mention de la délivrance du brevet: **18.11.2026**
(21) Numéro de dépôt: 24218378.8
(22) Date de dépôt: 09.12.2024
(51) Int. Cl.: A01B 73/00, A01B 63/22

(54) **PROCÉDÉ DE CONTRÔLE D'UNE MACHINE AGRICOLE ET UNE TELLE MACHINE AGRICOLE**
VERFAHREN ZUR STEUERUNG EINER LANDMASCHINE UND EINE SOLCHE LANDMASCHINE
METHOD FOR CONTROLLING AN AGRICULTURAL MACHINE AND SUCH AN AGRICULTURAL MACHINE

(30) Priorité: 12.12.2023 FR 2314012
(43) Date de publication de la demande: 18.06.2025
(73) Titulaire: Kuhn-Huard S.A.S, 44110 Chateaubriant (FR)
(72) Inventeur: BOSSUET, Djimy, 53800 LA SELLE CRAONNAISE (FR)
(74) Mandataire: Hager, Esther Evelyne

(56) Documents cités:
- US-A1- 2014 060 860
- US-A1- 2017 332 543
- US-A1- 2018 077 849
- US-B2- 10 747 195

## Description

La présente invention concerne le domaine des machines utilisées dans le cadre des travaux agricoles, plus particulièrement des machines agricoles destinées au travail du sol, au semis ou à la fenaison. Elle a pour objet un procédé de contrôle d'une machine agricole et une telle machine agricole.

La présente invention concerne plus spécialement des machines agricoles disposant d'une grande largeur de travail et qui sont repliables pour répondre à des normes de transport sur route. Le document US 2018077849 A1 décrit une machine de ce type.

Le regroupement des exploitations agricoles associés à l'augmentation des caractéristiques techniques des tracteurs permet d'utiliser des machines agricoles de plus en plus larges. Ces machines agricoles de grande largeur destinées par exemple au travail du sol ou au traitement du sol, disposent d'un châssis en plusieurs sections. De telles machines agricoles disposent d'une section centrale dont une partie forme un châssis généralement traîné et doté d'un essieu constitué de deux roues principales qui soutiennent la machine agricole en position repliée lors du transport. Une telle machine agricole de grande largeur présente généralement plusieurs sections reliées les unes aux autres par des articulations qui assurent un suivi du terrain quand la machine agricole travaille dans des champs non parfaitement plans. Les articulations servent également à replier la machine agricole en mode transport. Une telle machine agricole est par exemple un déchaumeur, par exemple un déchaumeur commercialisé par la société Kuhn sous le nom « OPTIMER ». Dans une version particulière, notamment dans une version de six ou neuf mètres de large, le déchaumeur dispose de trois sections : une section centrale et deux sections latérales. Dans une autre version de plus de neuf mètres de large, notamment une version de douze mètres de large, le déchaumeur dispose également d'une section centrale et de deux sections latérales mais, pour respecter les gabarits routiers, chaque section latérale est constituée de plusieurs sections, généralement deux sections, à savoir une section médiane et une section d'extrémité. Dans cette dernière version de douze mètres, le déchaumeur comporte donc cinq sections.

Au cours du travail, la machine agricole est déployée afin de traiter une grande largeur de terrain. Lorsque la machine est déployée, la section centrale et les sections latérales sont disposées les unes à côté des autres dans le sens de la largeur de travail. Pour respecter le gabarit routier et circuler sur les routes, les sections latérales sont repliées et disposées sensiblement verticalement de manière à réduire la dimension transversale de la machine au transport. Lors du transport, les sections latérales sont ramenées au-dessus de la section centrale. Chaque section latérale peut comprendre plusieurs sections, à savoir notamment une section médiane et au moins une section d'extrémité articulée sur la section médiane. La section d'extrémité se plie ou se déplie en même temps ou de manière décalée par rapport à la section médiane.

Chaque section latérale est équipée d'un ou plusieurs types d'outils de travail, par exemple : socs, disques, rouleaux, montés côte à côte ou les uns derrière les autres. Chaque section latérale comprend généralement en outre au moins une roue secondaire servant au réglage de la profondeur de travail des outils et à leur dégagement total hors du sol pour les manœuvres en bout de champ. La section centrale peut être équipée d'outils (fixés sur sa partie formant châssis) ou être dépourvue de tels outils. En fonction du type d'outils et en fonction de la largeur de la machine, le poids de chaque section latérale peut alors être plus ou moins important et peut impacter la stabilité de la machine pendant les phases de dépliage et de pliage des sections. Pour maintenir la stabilité de la machine, une solution est d'assurer un dépliage/pliage symétrique des sections latérales lorsque celle-ci repose sur un sol relativement plat. Cependant, dans ce cas, la stabilité peut être impactée à cause d'une accumulation de terre ou végétation sur l'une des sections latérales, créant une différence de charge entre les sections latérales et, par conséquent, un risque de basculement de la machine.

Sur un sol en dévers (pente transversale), un dépliage symétrique n'est pas conseillé à cause du risque de basculement causé par la roue située en contrebas qui supporte alors plus de poids que celle qui est située à un niveau supérieur du fait de l'inclinaison de la pente transversale.

La présente invention a pour but de pallier ces inconvénients en proposant un procédé de contrôle d'une machine agricole, et une telle machine agricole permettant sa mise œuvre, permettant de prévenir un basculement de la machine agricole lors du pliage/dépliage, en fonction des variations de charge supportées par les roues principales en appui au sol.

Le procédé de contrôle, selon la présente invention, d'une machine agricole comprenant, d'une part, deux sections latérales pliables dans une position de transport et dépliables dans une position de travail, au moins deux roues principales, à savoir au moins une première roue principale située du côté de l'une des sections latérales et au moins une deuxième roue principale située du côté de l'autre section latérale et une unité de commande pour commander le dépliage/pliage de chaque section latérale et, d'autre part, un dispositif de contrôle du dépliage/pliage comprenant un bloc de contrôle pour contrôler l'unité de commande et un système de mesure relié au bloc de contrôle et permettant de mesurer la charge sur les au moins deux roues principales, se caractérise en ce qu'il consiste :
- avant ou durant une commande de dépliage/pliage, à mesurer, au moyen du système de mesure, la charge sur la première roue principale pour obtenir au moins une première mesure et la charge sur la deuxième roue principale pour obtenir au moins une deuxième mesure,
- à comparer, au moyen du bloc de contrôle, la première mesure avec la deuxième mesure, puis, en fonction du résultat de la comparaison, à contrôler l'unité de commande de sorte à permettre le dépliage/pliage de l'une et/ou l'autre des sections latérales et/ou à bloquer le, ou limiter la vitesse de, dépliage/pliage de l'une et/ou l'autre des sections latérales pour éviter un risque de basculement de la machine agricole.

La machine agricole, selon la présente invention, qui comprend deux sections latérales pliables dans une position de transport et dépliables dans une position de travail, au moins deux roues principales, à savoir une première roue principale située du côté de l'une des sections latérales et une deuxième roue principale située du côté de l'autre section latérale et une unité de commande pour commander le dépliage/pliage de chaque section latérale, se caractérise en ce qu'elle comprend en outre un dispositif de contrôle du dépliage/pliage comprenant un bloc de contrôle pour contrôler l'unité de commande et un système de mesure relié au bloc de contrôle et permettant de mesurer la charge sur les au moins deux roues principales, à savoir sur la première roue principale pour obtenir au moins une première mesure et sur la deuxième roue principale pour obtenir au moins une deuxième mesure et en ce que le bloc de contrôle est configurée pour pouvoir comparer la première mesure avec la deuxième mesure et, en fonction du résultat de la comparaison, pour pouvoir contrôler l'unité de commande de sorte à permettre le dépliage/pliage de l'une et/ou l'autre des sections latérales et/ou à bloquer le, ou limiter la vitesse de, dépliage/pliage de l'une et/ou l'autre des sections latérales pour éviter un risque de basculement de la machine agricole.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue de dessus d'une machine agricole selon la présente invention dans une configuration déployée des sections latérales,
Fig. 2] est une vue avant de la machine agricole représentée sur la figure 1, dans une configuration où la machine agricole repose sur un sol en dévers et les sections latérales sont pliées dans la position de transport,
[Fig. 3] montre la machine représentée sur la figure 2 en cours de dépliage/ouverture de l'une des sections latérales,
[Fig. 4] est une vue avant d'une autre machine agricole qui repose sur un sol horizontal selon la présente invention dans une configuration où l'une des sections latérales est en cours de dépliage/pliage,
[Fig. 5] est une vue avant d'une machine agricole différente selon la présente invention dans une configuration en cours de dépliage/pliage de l'une des sections latérales dont la section d'extrémité se déplie simultanément avec la section médiane,
[Fig. 6] représente un schéma fonctionnel d'une machine agricole selon la présente invention reliée à un tracteur,
[Fig. 7] représente notamment le circuit de contrôle et de commande d'une machine agricole selon la présente invention.

Les figures montrent une machine agricole selon la présente invention comprenant au moins deux sections latérales 1a, 1b articulées entre elles. Les sections latérales 1a, 1b peuvent occuper deux positions principales, une position de travail et une position de transport, notamment de transport sur route. Dans la position de travail, les sections latérales 1a, 1b sont sensiblement alignées et dans la position de transport, les sections latérales 1a, 1b s'étendent verticalement. Les mouvements relatifs entre les sections sont obtenus par l'intermédiaire de vérins. Chaque section est destinée à recevoir des outils pouvant indifféremment être constitués de dents, de disques, de socs, d'éléments semeurs ou autres. Une telle machine agricole peut, en fonction des outils qu'elle porte, être destinée au travail du sol, au semis ou à la fenaison. Le châssis d'une telle machine à plusieurs sections est généralement traîné et est doté d'un essieu constitué de deux roues principales qui soutiennent la machine en position repliée lors du transport. Les deux roues principales sont situées de sorte à s'étendre avantageusement dans la limite du gabarit routier à respecter pour le transport. La structure de la machine agricole selon l'invention est avantageusement symétrique pour que l'effort de traction soit réparti de manière homogène.

De préférence, la machine agricole peut comprendre au moins un essieu comportant un axe transversal 20 et au moins deux roues 2a, 2b principales, à savoir la première roue 2a principale et la deuxième roue 2b principale, comportant chacune un moyeu 21.

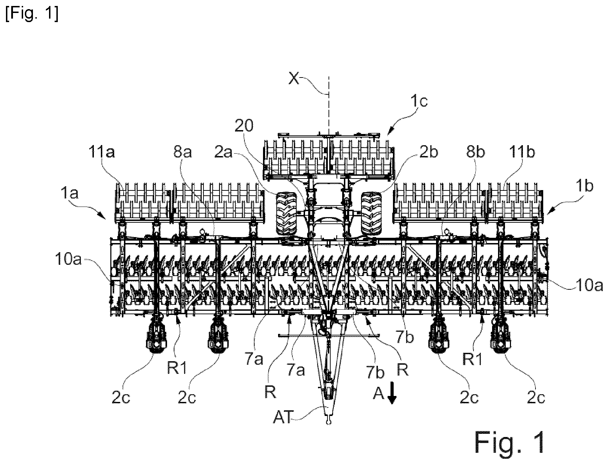

Les figures 1 à 3 et 5 représentent une machine agricole, selon la présente invention, de travail du sol S ou le traitement du sol S, avec une grande largeur de travail. On peut voir sur ces figures, que la machine agricole peut comprendre cinq sections, à savoir une section centrale 1c et deux sections latérales 1a, 1b. Chaque section latérale 1a, 1b peut comporter plusieurs sections, notamment une section médiane 10a, 10b et une section d'extrémité 11a, 11b. La figure 1 représente la machine agricole suivant une vue de dessus en position dépliée de travail. Les sections médianes 10a, 10b sont articulées de part et d'autre de la section centrale 1c et sur une partie formant châssis de cette dernière respectivement par des articulations R. Les sections d'extrémité 11a, 11b sont articulées sur les sections médianes 10a, 10b, sur leurs bords externes, respectivement par des articulations R1. La section centrale 1c de la machine agricole est la section qui est directement reliée, par sa partie formant châssis, au véhicule du type tracteur (non représenté). La partie formant châssis de la section centrale 1c porte les roues 2a, 2b principales. On entend par « roues 2a, 2b principales » des roues qui servent au roulage de la machine agricole à la fois lors du transport sur route et lors du travail de la machine. Elles s'étendent avantageusement entre les rangées de disques et le rouleau. Au moins une première roue 2a principale s'étend d'un côté de l'axe longitudinal X ou du plan médian longitudinal de la machine agricole et au moins une deuxième roue 2b principale s'étend de l'autre côté. Le plan médian longitudinal de la machine agricole passe avantageusement par l'axe longitudinal X. Dans l'exemple représenté sur la figure 1, la machine agricole est équipée, selon la direction d'avance A et sur toute sa largeur de deux rangées de disques et d'un rouleau. Les deux rangées de disques indépendants assurent le déchaumage et le rouleau double assure le nivellement de la terre. Chaque section latérale 1a, 1b peut être équipée d'une ou plusieurs roues 2c secondaires servant au réglage de la profondeur de travail des outils et à leur dégagement total hors du sol S pour les manœuvres en bout de champ. Ces roues 2c secondaires ne servent pas, contrairement aux roues 2a, 2b principales, lors du transport, c'est-à-dire qu'elles ne restent pas en contact avec le sol lors du transport. Lors du transport, ces roues 2c secondaires sont soit repliées avec les sections latérales 1a, 1b, soit escamotées. Dans l'exemple de la machine agricole représentée sur la figure 1, les roues 2c secondaires équipant les sections latérales 1a, 1b s'étendent à l'avant des rangées de disques. De manière alternative, les roues 2c secondaires peuvent s'étendre entre les outils ou à l'arrière. De préférence, chaque section latérale 1a, 1b porte une roue 2c secondaire. De préférence, chaque roue secondaire 2c est réglable en hauteur, par exemple au moyen d'un actionneur du type vérin. Les articulations R, et le cas échéant R1, permettent le repliage de la machine agricole en mode transport et le dépliage (ou déploiement) de la machine agricole en mode travail et permettent également d'assurer un suivi du terrain quand la machine agricole travaille dans des champs non parfaitement plans. En fonction des outils équipant la machine agricole, il est envisageable que les roues principales 2a, 2b soient relevées lors du travail.

Selon l'invention, la machine agricole comprend au moins deux sections latérales 1a, 1b pliables dans une position de transport et dépliables dans une position de travail, au moins deux roues 2a, 2b principales, à savoir une première roue 2a principale située du côté de l'une des sections latérales 1a et une deuxième roue 2b principale située du côté de l'autre section latérale 1b et une unité (ou un bloc) de commande 3 pour commander le dépliage/pliage de chaque section latérale 1a, 1b. Dans une réalisation spécifique, la section centrale 1c de la machine agricole peut être dépourvue d'outils.

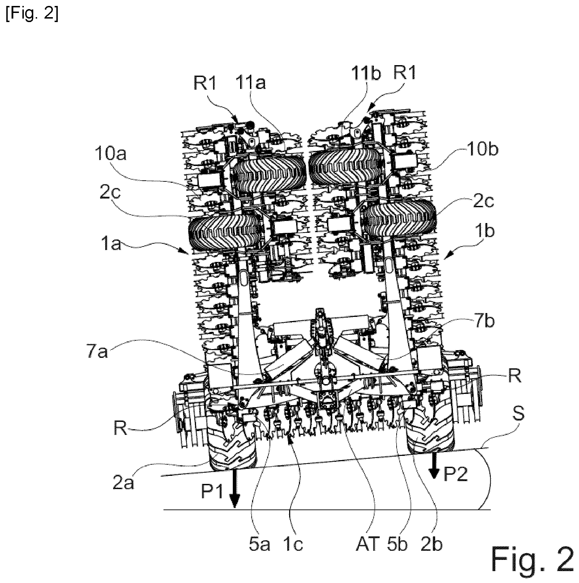

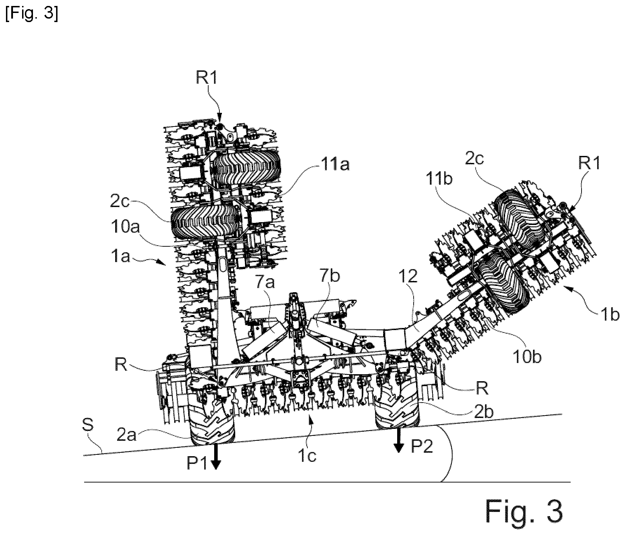

La figure 2 représente une vue avant de la machine agricole dans une position de plus faible encombrement correspondant à la position de transport sur route. Lors du transport, les sections latérales 1a, 1b sont ramenées au-dessus de la section centrale 1c. Les sections d'extrémités 11a, 11b pivotent d'environ 180° par rapport aux sections médianes 10a, 10b puis les sections médianes 10a, 10b pivotent d'environ 90° par rapport à la section centrale 1c. Ainsi, les outils des sections latérales d'extrémité 11a, 11b sont positionnés dans l'espace entre les sections médianes 10a, 10b. Les deux roues 2a, 2b principales appartenant à la section centrale 1c sont en appui sur le sol S dans cette position de transport et s'étendent sur la section centrale 1c de manière à ce qu'au moins une des roues 2a, 2b principales soit positionnée au moins partiellement en-dessous de la section médiane 10a, 10b respective. En position transport, les sections latérales 1a, 1b sont repliées sensiblement à la verticale. Au moins une roue 2a, 2b principale est placée de chaque côté du plan vertical médian de la machine agricole. On remarque que la machine agricole représentée sur la figure 2 repose sur un sol S en dévers. La figure 3 montre la machine agricole dans une position intermédiaire à celle des figures 1 et 2, une des sections latérales 1a, 1b est en cours de repliage ou de dépliage. La figure 2 montre la machine agricole reposant sur un sol S en dévers.

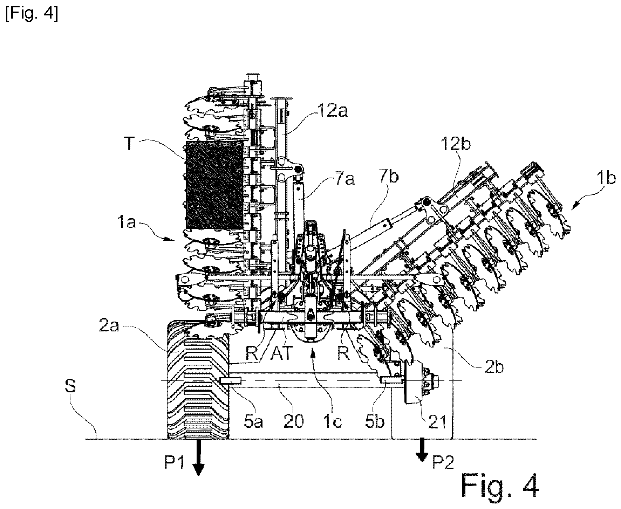

La machine agricole représentée sur la figure 4 correspond à une machine agricole repliable avec trois sections : une section centrale 1c et deux sections latérales 1a ,1b. Chaque section latérale 1a, 1b forme une unique section. La section centrale 1c peut être dépourvue d'outils comme on peut le voir sur la figure 4 ou, dans une forme non illustrée, équipée d'outils. Une telle machine agricole dispose d'une largeur de travail de quatre à neuf mètres, par exemple environ cinq mètres. Elle satisfait à la règlementation du gabarit routier. Les figures 1 à 3 et 5 illustrent une version de la machine agricole repliable avec cinq sections : une section centrale 1c, deux sections médiane 10a, 10b et deux sections d'extrémité 11a, 11b. Chaque section médiane 10a, 10b et chaque section d'extrémité 11a, 11b forment ensemble une section latérale 1a, 1b et sont repliables l'une par rapport à l'autre pour permettre à la machine agricole de respecter la règlementation du gabarit routier (en mode transport). Une telle machine agricole avec cinq sections permet de disposer d'une largeur de travail supérieure à neuf mètres, notamment d'environ douze mètres. Il s'agit d'une machine agricole de très grande largeur. Si l'on compare ces deux versions de la machine agricole repliable, les sections latérales 1a, 1b de la version avec trois sections (figure 4) sont donc en quelque sorte dépourvues des sections d'extrémité de la version avec cinq sections (figures 1 à 3, 5).

Que ce soit dans la version avec trois sections ou dans la version avec cinq sections, lorsque la section centrale 1c est dépourvue d'outils (figure 4) les articulations R permettant le pivotement des sections latérales 1a, 1b peuvent être plus proches de l'axe longitudinal X de la machine agricole que dans le cas où la section centrale 1c est pourvue/équipée d'outils (figures 1 à 3 et 5). En outre, lorsque la section centrale 1c est pourvue/équipée d'outils (figures 1 à 3 et 5), les articulations R peuvent être chacune plus proche d'un/située sur un axe parallèle à l'axe longitudinale X et passant par la roue 2a, 2b principale (située du même côté) que dans le cas où la section centrale 1c est dépourvue d'outils (figure 4).

La machine agricole à plusieurs sections représentée sur les figures 1 à 3 est une machine agricole configurée pour être tractée par un véhicule du type tracteur (non représenté). Elle comprend à cet effet un élément d'attelage AT. L'élément d'attelage AT est relié à la section centrale 1c de la machine agricole. La section centrale 1c s'étend transversalement de part et d'autre de l'axe longitudinal X, elle est centrée par rapport au plan vertical médian de la machine agricole. L'élément d'attelage AT représenté sur la figure 1 est réalisé sous la forme d'un timon équipé à l'avant d'un anneau de traction adapté pour une rotule d'attelage. D'après les figures, le châssis est doté d'un essieu d'axe transversal 20 comportant deux roues 2a, 2b principales qui servent d'appui au sol S lors du transport de la machine et qui servent au réglage de la profondeur de travail des outils au cours du travail. La roue droite, vu dans le sens d'avancement A, est la première roue 2a principale et la roue gauche correspond à la deuxième roue 2b principale.

Dans l'exemple de réalisation représenté sur la figure 4, la machine agricole repose sur un sol S horizontal et comprend deux sections latérales 1a, 1b articulées sur une section centrale 1c dépourvue d'outils. La partie avant de l'élément d'attelage AT est adaptée pour être attelée aux deux bras inférieurs du véhicule tracteur. L'une des sections latérales 1b est en cours de repliage tandis que l'autre section latérale 1a est repliée, sensiblement à la verticale. Pour plus de commodité, le moyeu 21, le pneu et la jante de la roue gauche ne sont pas représentés sur la figure 4, seul le pourtour de la roue gauche est représenté. On peut voir que la section latérale 1a s'étend sensiblement au-dessus de la roue gauche dans sa position repliée. Dans la position de transport, les sections latérales 1a, 1b avec les outils s'étendent dans l'encombrement en largeur des roues 2a, 2b principales. Comme visible sur la figure 4, les sections latérales 1a, 1b ne supportent pas de roues 2c secondaires.

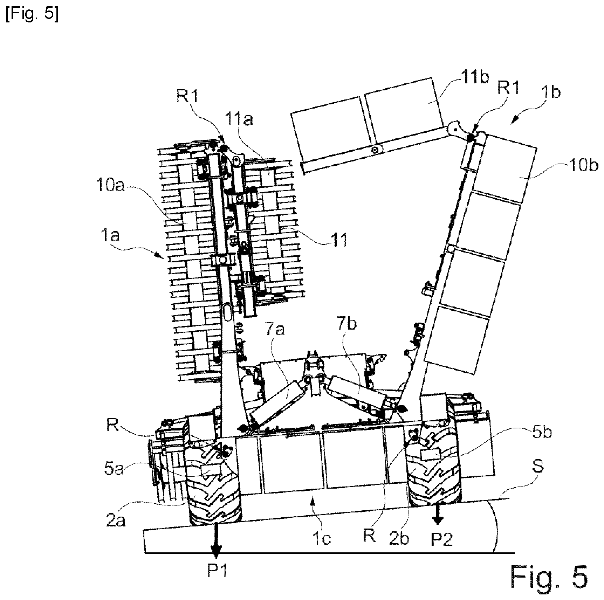

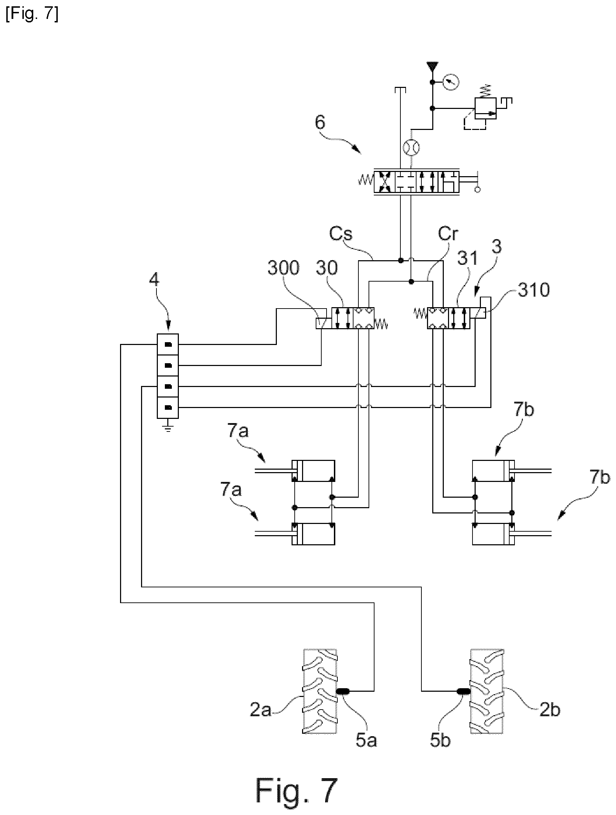

On comprend que chaque section latérale 1a, 1b peut être constituée d'une seule section (figure 4) ou de plusieurs section(s), par exemple deux sections (figures 1 à 3) et que, dans le cas où la section latérale 1a, 1b est constituée de plusieurs sections, elle comprend une section médiane 10a, 10b et au moins une section d'extrémité 11a, 11b. La section d'extrémité 11a, 11b peut être déplacée par rapport à la section médiane 10a, 10b entre une position pliée et une position dépliée, par exemple en étant montée pivotante sur la section médiane 10a, 10b ou, le cas échéant (plus de deux sections d'extrémité 11a, 11b) sur une autre section d'extrémité 11a, 11b. Dans la position pliée, la section d'extrémité 11a, 11b vient se rabattre contre la section médiane 10a, 10b (figures 2, 3, 5), la section d'extrémité 11a, 11b peut pivoter préférentiellement de 180°. Dans la position dépliée (figure 1), la section d'extrémité 11a, 11b se positionne dans le prolongement de la section médiane 10a, 10b. La section centrale 1c et les sections latérales 1a, 1b sont alors alignées et dans une configuration de travail. Dans le cas d'une section latérale 1a, 1b en plusieurs sections, le pliage/dépliage de la section latérale 1a, 1b comprend l'opération de pliage/dépliage de la section médiane 10a, 10b et, le cas échéant, l'opération de pliage/dépliage de la ou chaque section d'extrémité 11a, 11b. Le dépliage ou pliage de la section médiane 10a, 10b et de la section d'extrémité 11a, 11b peut être organisé de façon aléatoire ou coordonnée. De préférence, la section d'extrémité 11a, 11b est dépliée ou pliée en même temps que la section médiane 10a, 10b (figures 5, 7) de sorte à permettre un dépliage/pliage plus rapide de la section latérale 1a, 1b.

Comme on peut le voir sur les figures 1 à 3, chaque section de la machine agricole constitue une structure porteuse pour la variété d'outils qui vont effectuer un travail. Sur la figure 5 seules les sections latérales 1a, 1b constituent une telle structure porteuse d'outils, la section centrale 1c étant dépourvue d'outils. On comprend que selon le type de machine agricole selon la présente invention, la section centrale 1c peut comporter des outils (figures 1 à 3, 5) ou être dépourvue d'outils (figure 4). La section centrale 1c repose sur le sol S au moyen des roues 2a, 2b principales. Chaque section latérale 1a, 1b peut alors être déplacé par rapport à la section centrale 1c, notamment en étant montée pivotante, au moins entre la position de transport et la position de travail. Chaque section latérale 1a, 1b est alors pliée (ou repliée ou fermée ou relevée) lorsqu'elle est déplacée dans la direction de la position de travail vers la position de transport et dépliée (ou déployée ou ouverte) lorsqu'elle déplacée dans la direction de la position de transport vers la position de travail. Chaque section latérale 1a, 1b pivote par rapport à la section centrale 1c. L'axe transversal 20 de l'essieu (ou de chaque essieu) est supporté par la section centrale 1c, c'est-à-dire par la partie formant châssis de la partie centrale 1c. Chaque section latérale 1a, 1b peut être montée pivotante en étant articulée autour d'un pivot de l'articulation R parallèle (le pivot) à l'axe longitudinal X de la machine agricole ou au sens d'avancement A de la machine agricole. Le pivotement, de préférence d'environ 90°, de chaque section latérale 1a, 1b se fait ainsi autour du pivot de l'articulation R respective.

La machine agricole peut reposer par ses roues 2a, 2b principales sur un sol S horizontal (figures 1 et 4) ou en dévers (figures 2, 3, 5), c'est-à-dire incliné transversalement. Dans la position pliée pour le transport ou en attente d'être dépliée, la section latérale 1a, 1b, le cas échéant sa section médiane 10a, 10b, s'étend sensiblement verticalement (sol S horizontal), ou sensiblement perpendiculairement (sol S horizontal ou en dévers), par rapport au sol S. Dans la position dépliée pour le travail, la section latérale 1a, 1b s'étend sensiblement horizontalement (sol S horizontal) ou sensiblement parallèlement (sol S horizontal ou en dévers) par rapport au sol S.

Si on se réfère à nouveau aux figures 1 à 4, on peut voir que la machine agricole comporte au moins un actionneur 7a, 7b principal pour entraîner/actionner le déplacement de chaque section latérale 1a, 1b (figures 1 à 7). Au moins un premier actionneur 7a principal peut alors entraîner le pivotement de la première section latérale 1a et au moins un deuxième actionneur 7b principal peut alors entraîner le déplacement de la deuxième section latérale 1b. Dans le cas d'une section latérale 1a, 1b à plusieurs sections 10a,10b,11a,11b, la machine agricole comporte en outre au moins un actionneur 8a, 8b secondaire pour entraîner le pivotement de la section d'extrémité 11a, 11b par rapport à la section médiane 10a, 10b. De préférence, chaque actionneur 7a, 7b, 8a, 8b (principal ou secondaire) est un vérin double effet. Un tel vérin double effet comporte classiquement une tige comportant à l'une de ses extrémités un piston mobile dans le corps du vérin. Le piston délimite deux chambres de volume variables, à savoir une petite chambre et une grande chambre (voir notamment la figure 7). D'une manière particulièrement avantageuse, on peut utiliser deux actionneurs 7a, 7b pour commander le repliage ou le pliage des sections latérales lorsque celles-ci supportent plusieurs types d'outils les uns derrière les autres. Ainsi en fonction du poids de la section latérale 1a, 1b, on choisira d'utiliser un ou deux actionneurs 7a, 7b pour l'opération de pliage/repliage. Le schéma hydraulique de la figure 7 montre par exemple l'utilisation de deux actionneurs 7a, 7b par côté permettant le repliage des sections latérales 1a, 1b respectives.

Dans une forme préférentielle, chaque actionneur 7a, 7b principal du type vérin double effet, peut être articulé d'une part sur la section latérale 1a, 1b et d'autre part sur la section centrale 1c de la machine agricole. Chaque actionneur 8a, 8b secondaire du type vérin double effet, peut être articulé d'une part sur la section d'extrémité 11a, 11b et d'autre part sur la section médiane de la section latérale 1a, 1b. L'agencement et le fonctionnement des actionneurs 7a, 7b principaux peuvent être définis de sorte que la rentrée de la tige du vérin principal 7a, 7b puisse actionner le pliage de la section latérale 1a, 1b et que la sortie de la tige du vérin principal 7a, 7b puisse actionner le dépliage de la section latérale 1a, 1b. Le cas échéant, l'agencement et le fonctionnement des actionneurs 8a, 8b secondaires peuvent être définis de sorte que la rentrée de la tige du vérin secondaire 8a, 8b secondaire puisse actionner le pliage de la section d'extrémité 11a, 11b et que la sortie de la tige du vérin secondaire 8a, 8b puisse actionner le dépliage de la section d'extrémité 11a, 11b.

Par ailleurs, on comprend qu'une charge P1, P2 s'exerce sur chaque roue 2a, 2b principale de la machine agricole et que cette charge P1, P2 peut varier en fonction de différents facteurs et/ou différentes situations. La charge P1, P2 est le poids supporté par la roue 2a, 2b principale (ou, dit autrement, l'effort sur la roue 2a, 2b principale). Ainsi, la charge P1 qui s'exerce sur la première roue 2a principale peut être identique (ou sensiblement identique) (figure 1) ou différente (figures 2 à 5) de la charge P2 qui s'exerce sur la deuxième roue 2b principale. La charge P1, P2 est représentée sur les figures annexées concernées de façon vectorielle par une flèche orientée vers le bas, la longueur du vecteur dépendant de la valeur de la charge (le poids) P1, P2. Cette différence ou cette équivalence peut être due à différents facteurs et/ou situations :
- cas 1 (non représenté sur les figures) : la machine agricole est sur un sol S horizontal avec une charge P1, P2 équivalente sur les première et deuxième roues 2a, 2b principales,
- cas 2 (figures 2, 3 et 5) : la machine agricole est sur un sol en devers, c'est-à-dire avec une pente transversale (transversalement par rapport à son axe longitudinale X), avec une charge P1, P2 non équivalente sur les première et deuxième roues 2a, 2b principales, la charge P1 s'exerçant sur la première roue 2a principale (en contrebas) étant supérieure à la charge P2 s'exerçant sur la deuxième roue 2b principale (roue située à un niveau supérieur),
- cas 3 (figure 4) : la machine agricole est sur un sol S horizontal, avec une charge P1, P2 non équivalente sur les première et deuxième roues 2a, 2b principales, par exemple du fait, comme on peut le voir sur la figure 4, que l'une des sections latérales 1, par exemple la première section latérale 1a, comporte ou est colmatée avec de la terre T. Dans ce cas la charge P1 s'exerçant sur la première roue 2a principale est supérieure à la charge P2 s'exerçant sur la deuxième roue 2b principale,
- cas 4 : la machine agricole est sur un sol S en devers, avec une charge P1, P2 sur les première et deuxième roues 2a, 2b principales inverse par rapport à la pente du sol S (situation des charges P1, P2 inverse du cas 2), c'est-à-dire que la charge P1 s'exerçant sur la première roue 2a principale (en contrebas) est inférieure à la charge P2 s'exerçant sur la deuxième roue 2b principale (roue située à un niveau supérieur). Cette situation peut être due par exemple à une quantité de terre importante alourdissant notablement la deuxième section latérale 1b.

Ces différences de charge sur les roues 2a, 2b principales peuvent entraîner un risque de basculement de la machine agricole lors d'une phase de dépliage ou de pliage des sections latérales 1a, 1b.

Pour remédier notamment à ce problème, conformément à la présente invention, la machine agricole comprend en outre un dispositif de contrôle du dépliage/pliage comprenant un bloc de contrôle 4 pour contrôler l'unité de commande 3 et un système de mesure relié au bloc de contrôle 4 et permettant de mesurer la charge P1, P2 sur les au moins deux roues 2a, 2b principales, à savoir la charge P1 sur la première roue 2a principale (ou le cas échéant sur au moins l'une des premières roues 2a principales) pour obtenir au moins une première mesure et la charge P2 au moins sur la deuxième roue 2b principale (ou le cas échéant sur au moins l'une des deuxièmes roues 2b principales) pour obtenir au moins une deuxième mesure. En outre, le bloc de contrôle 4 est configuré pour pouvoir comparer la première mesure avec la deuxième mesure et, en fonction du résultat de la comparaison, pour pouvoir contrôler l'unité de commande 3 de sorte à permettre le dépliage/pliage de l'une et/ou l'autre des sections latérales 1a, 1b et/ou à bloquer le, ou limiter la vitesse de, dépliage/pliage de l'une et/ou l'autre des sections latérales 1a, 1b pour éviter un risque de basculement de la machine agricole.

L'unité de commande 3 reçoit donc des consignes du bloc de contrôle 4 qui est configuré pour pouvoir comparer la charge P1, P2 mesurée sur les première(s) et deuxième(s) roue(s) 2a, 2b principales et pour pouvoir commander au moins l'un et/ou l'autre des actionneurs principaux 7a, 7b, et le cas échéant secondaires 8a, 8b, en fonction du résultat de la comparaison.

De préférence, préférence, le bloc de contrôle 4 réalise la comparaison au moins avant l'opération de dépliage/pliage, éventuellement au courant de l'opération de pliage/dépliage. Pour une sécurité maximale, il est important de réaliser une mesure de charges sur les roues 2a et 2b principales et d'effectuer une comparaison au préalable de la phase de dépliage/pliage de la machine agricole à plusieurs sections. De préférence, les prises de mesure via les capteurs 5a, 5b sont réalisées lorsque la machine agricole n'évolue pas, c'est-à-dire qu'elle ne bouge pas. La fiabilité des mesures est plus élevée lorsque la machine agricole est statique. Néanmoins, le dispositif de contrôle du dépliage/pliage est également fonctionnel lorsque la machine agricole est en mouvement ou pas complètement arrêtée.

Dans un mode de réalisation préférentiel, le système de mesure comprend au moins deux capteurs 5a, 5b de mesure, à savoir au moins un premier capteur 5a apte et destiné à mesurer la charge P1 sur la première roue 2a principale et au moins un deuxième capteur 5b apte et destiné à mesurer la charge P2 sur la deuxième roue 2b principale. De préférence chaque capteur 5a, 5b peut être un capteur de force, plus préférentiellement un capteur de force comportant au moins une jauge de contrainte. De préférence, chaque capteur 5a est situé sur l'axe transversal 20 à proximité du moyeu 21 de la première ou deuxième roue 2a principale, 2b correspondante ou en un point situé sur le moyeu 21 de la première ou deuxième roue 2a, 2b principale correspondante. Les figures 2, 4 et 5 montrent schématiquement les emplacements des capteurs 5a, 5b. D'une manière particulièrement avantageuse et pour parfaire la comparaison des deux mesures, les capteurs 5a et 5b sont disposés de manière symétrique par rapport à l'axe longitudinal X de la machine agricole. On comprend que le premier capteur 5a est situé sur l'axe transversal 20 à proximité du moyeu 21 de la première roue 2a principale ou en un point situé sur le moyeu 21 de la première roue 2a principale et que le deuxième capteur 5b est situé sur l'axe transversal 20 à proximité du moyeu 21 de la deuxième roue 2b principale ou en un point situé sur le moyeu 21 de la deuxième roue 2b principale. D'une manière particulièrement avantageuse et pour parfaire la comparaison des deux mesures, les capteurs 5a et 5b peuvent être disposés de manière symétrique par rapport à l'axe longitudinal X de la machine agricole. Le système de mesure comprend donc au moins un capteur 5a, 5b configuré pour détecter directement ou indirectement la charge appliquée sur l'une des roues 2a, 2b principales et au moins un capteur 5b, 5a configuré pour détecter directement ou indirectement la charge appliquée sur l'autre des roues 2b, 2a principales. Les capteurs 5a, 5b fournissant ainsi une indication de poids de la section latérale 1a, 1b associée sur laquelle la roue 2a, 2b principale est supportée. Compte tenu de ce qui précède, les roues 2c secondaires qui ne sont pas en contact avec le sol S durant les phases de pliage/dépliage de la machine agricole ne sont pas équipées de tels capteurs.

Dans une forme de réalisation non illustrée, la machine agricole peut comprendre au moins un boggie comportant au moins deux essieux reliés entre eux par des éléments de liaison. Dans cette forme, chaque capteur 5a, 5b peut être disposé sur l'un des éléments de liaison reliant les essieux.

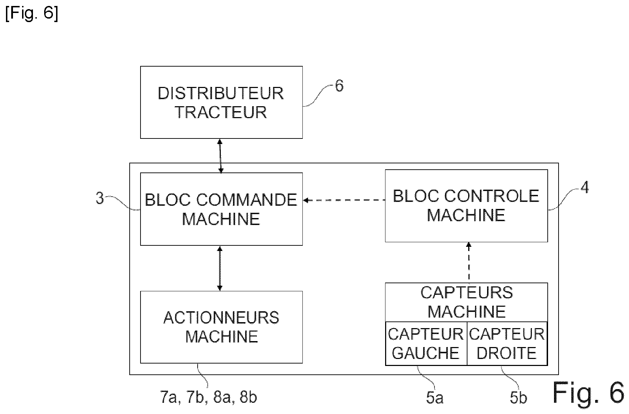

Le véhicule tracteur auquel peut être attelée et reliée hydrauliquement la machine agricole selon la présente invention peut comporter un distributeur 6, comme c'est le cas généralement dans ce type de véhicule (figures 6 et 7). Ce distributeur 6 a pour fonction de diriger le fluide sous pression dans les différents circuits du tracteur et de la machine agricole attelée à ce dernier. L'unité de commande 3 peut alors être reliée en outre au distributeur 6 de sorte à pouvoir alimenter en fluide hydraulique sous pression les actionneurs 7a, 7b principaux, et le cas échéant les actionneurs secondaires 8a, 8b, via l'unité de commande 3 (figures 6 et 7). Le distributeur 6 peut être commandé par l'utilisateur ou automatiquement par une électronique de commande.

Les opérations de mesures par le système de mesure et/ou les opérations d'acquisition des mesures par le bloc de contrôle 4 et/ou les opérations de traitement, notamment de comparaison, par le bloc de contrôle 4 peuvent être effectuées selon une fréquence prédéterminée ou à chaque instant dès qu'une commande de dépliage/pliage est effectuée par l'utilisateur ou automatiquement par une électronique de commande. Par exemple une comparaison pourra être effectuée toutes les secondes (1Hz) ou toutes les demi-secondes. En pratique, puisque la vitesse de dépliage des sections latérales de la machine agricole est assez rapide, une fréquence de comparaison adaptée pourrait être de 10Hz ou plus. L'électronique de commande peut comprendre un programme de commande du pliage/dépliage en fonction de l'avancement et de la position de la machine agricole sur le sol S. La fréquence de comparaison est adaptée à la technologie.

Si on se réfère à la figure 7, on peut voir que la machine agricole peut comprendre deux circuits d'alimentation Cr, Cs pour alimenter en fluide sous pression des vérins double effet formant chacun l'un des actionneurs 7a, 7b principaux, à savoir un circuit Cr d'alimentation de la petite chambre des vérins 7a, 7b et un circuit Cs d'alimentation de la grande chambre des vérins 7a, 7b. Ces deux circuits d'alimentation Cr et Cs alimentent préférentiellement deux vérins 7a pour l'actionnement de la première section latérale 1a et deux vérins 7b pour l'actionnement de la deuxième section latérale 1b. Ces deux circuits d'alimentation Cr et Cs sont sélectionnés par le distributeur 6 (et donc par l'utilisateur ou l'électronique de commande qui commande le distributeur 6), c'est-à-dire que selon l'état du distributeur 6 le fluide sous pression est dirigé vers le circuit Cr ou vers le circuit Cs. On comprend que c'est donc le distributeur 6 (et donc l'utilisateur) qui sélectionne s'il faut commander le dépliage (par exemple ici par la sortie de tige) ou le pliage (par exemple ici par la rentrée de tige) des sections latérales 1a, 1b.

Toujours sur la figure 7, on peut voir que l'unité de commande 3 reliée au distributeur 6 est configurée pour pouvoir diriger le fluide vers l'une et/ou l'autre des sections latérales 1a, 1b, c'est-à-dire vers les deux vérins 7a de la première section latérale 1a et/ou vers les deux vérins 7b de la deuxième section latérale 1b. On peut voir sur cette figure 7 que le circuit est agencé de sorte que les deux vérins 7a, 7b actionnant chaque section latérale 1a, 1b soient alimentés en même temps et avec le même débit. On peut voir également que l'unité de commande 3 comporte deux distributeurs 30, 31, à savoir un premier distributeur 30 pour permettre l'alimentation en fluide sous pression des deux vérins 7a actionnant la première section latérale 1a et un deuxième distributeur 31 pour permettre l'alimentation en fluide sous pression des deux vérins 7b actionnant la deuxième section latérale 1b. Chaque distributeur 30, 31 comporte une bobine 300, 310 connecté électriquement au bloc de contrôle 4. Chaque distributeur 30, 31 est donc commandé (électriquement) par le bloc de contrôle 4. Comme on peut le voir sur la figure 7, chaque distributeur 30, 31 peut être un distributeur à tiroirs 4/2, c'est-à-dire avec quatre orifices et deux positions, à savoir une position de repos (position illustrée sur la figure 7) dans laquelle la bobine 300, 310 du distributeur 30, 31 et le passage du fluide est fermé/bloqué et une position de travail dans laquelle la bobine 300, 310 est alimentée et le passage du fluide est ouvert.

La présente invention peut prévoir d'autres types de distributeur 30, 31, par exemple des distributeurs proportionnels (à commande proportionnelle et à tiroir progressif) qui permettent d'ouvrir le passage au fluide progressivement contrairement aux distributeurs 30, 31 à tiroirs 4/2 qui fonctionnent en tout ou rien. Dans ce dernier cas (distributeur proportionnel) le déplacement du tiroir est proportionnel à la commande (signal électrique émis par le bloc de contrôle 4). Le bloc de contrôle 4 relié à un tel distributeur proportionnel doit donc être adapté en conséquence. Un tel distributeur proportionnel permet par conséquent d'obtenir dans le circuit d'alimentation Cr ou Cs un débit faible ou élevé suivant le signal électrique de commande et donc de régler la vitesse de dépliage/pliage (vitesse de sortie/rentrée de tige).

Dans un mode de réalisation préférentielle, l'unité de contrôle 4 est configurée pour déterminer la différence (en valeur absolue) entre la première mesure et la deuxième mesure et :
- dans le cas où la différence est identique ou inférieure à une valeur seuil, par exemple une valeur seuil correspondant à une différence de l'ordre de 5% à 15%, préférentiellement de l'ordre de 10%, entre la première et la deuxième mesure, pour contrôler l'unité de commande 3 de sorte à permettre le dépliage/pliage (ou dit autrement : la commande de dépliage/pliage) des deux sections latérales 1a, 1b,
- dans le cas où la différence est supérieure à la valeur seuil, pour contrôler l'unité de commande 3 de sorte à permettre le dépliage/pliage (ou dit autrement : la commande de dépliage/pliage) de la section latérale 1a, 1b située du côté de la roue 2a, 2b principale sur laquelle la charge P1, P2 mesurée est la plus faible et à bloquer le, ou à limiter la vitesse de, dépliage/pliage de la section latérale 1a, 1b située du côté de la roue 2a, 2b principale sur laquelle la charge P1, P2 mesurée est la plus importante.

Selon la présente invention, c'est donc toujours la section latérale 1a, 1b située du côté de la roue 2a, 2b principale où la charge P1, P2 s'exerçant sur cette dernière est moindre (par rapport à la charge P1, P2 s'exerçant sur la roue 2a, 2b principale située de l'autre côté) qui doit être dépliée/pliée en priorité. Par opposition, c'est toujours la section latérale 1a, 1b où la charge P1, P2 s'exerçant sur la roue 2a, 2b principale est supérieure (par rapport à la charge P1, P2 s'exerçant sur la roue 2a, 2b principale située de l'autre côté) qui va être bloquée ou dont la vitesse de dépliage/pliage va être limitée.

Le bloc de contrôle 4 peut consister en une carte électronique capable de gérer les fonctions de la machine agricole selon la présente invention. Elle peut comprendre un processeur et au moins une mémoire stockant un programme informatique comprenant des instructions de comparaison entre les premières et deuxièmes mesures de charge P1, P2 réalisées par le système de mesure et de de commande, en fonction du résultat de la comparaison, de l'unité de commande 3. Le cas échéant, la ou l'une des mémoires peut comprendre la valeur seuil ou plusieurs valeurs seuils sélectionnables.

Ainsi, par exemple, dans les cas 1 à 4 précités, lors d'une commande du distributeur 6 pour déplier ou plier les sections latérales 1 :
- dans le cas 1 (sol horizontal) : le bloc de contrôle 4 reçoit, sous forme de signaux électriques, les mesures des capteurs 5a, 5b représentatives d'une charge P1, P2 équivalente sur les première et deuxième roue 2a, 2b principales et envoie un ordre d'alimentation (signal électrique de commande) à l'unité de commande 3 (aux distributeurs 30, 31) pour que celle-ci (ou ceux-ci) commande avec un débit identique l'alimentation en fluide sous pression des vérins principaux 7a, 7b, et le cas échéant des vérins secondaires 8a, 8b, des deux sections latérales 1a, 1b de sorte à permettre le dépliage ou pliage de ces dernières (simultanément).
- dans le cas 2 (sol en dévers) : le bloc de contrôle 4 reçoit, sous forme de signaux électriques, les mesures des capteurs 5a, 5b représentatives d'une charge P1, P2 non équivalente sur les première et deuxième roue 2a, 2b principales, et notamment représentatives d'une charge P1 sur la première roue 2a principale (en contrebas) supérieure à la charge P2 sur la deuxième roue 2b principale (roue située à un niveau supérieur), et envoie un ordre d'alimentation (signal électrique de commande) à l'unité de commande 3 (aux distributeurs 30, 31) pour que celle-ci (ceux-ci) commande l'alimentation en fluide sous pression des vérins principaux 7a, 7b, et le cas échéant des vérins secondaires 8a, 8b, des deux sections latérales 1a, 1b de sorte à bloquer ou limiter la vitesse de dépliage/pliage de la première section latérale 1a et à permettre le dépliage/pliage de la deuxième section latérale 1b,
- dans le cas 3 (sol horizontal) : le bloc de contrôle 4 reçoit, sous forme de signaux électriques, les mesures des capteurs 5a, 5b représentatives d'une charge P1, P2 non équivalente sur les première et deuxième roue 2a, 2b principales, notamment représentatives d'une charge P1 sur la première roue 2a principale inférieure à la charge P2 sur la deuxième roue 2b principale, et envoie un ordre d'alimentation (signal électrique de commande) à l'unité de commande 3 (aux distributeurs 30, 31) pour que celle-ci (ceux-ci) commande l'alimentation en fluide sous pression des vérins principaux 7a, 7b, et le cas échéant des vérins secondaires 8a, 8b, des deux sections latérales 1a, 1b de sorte à bloquer ou limiter la vitesse de dépliage/pliage de la deuxième section latérale 1b et à permettre le dépliage/pliage de la première section latérale 1a,
- dans le cas 4 (sol en dévers) : le bloc de contrôle 4 reçoit, sous forme de signaux électriques, les mesures des capteurs 5a, 5b représentatives d'une charge P1, P2 non équivalente sur les première et deuxième roue 2a, 2b principales, notamment d'une charge P1 sur la première roue 2a principale (en contrebas) inférieure à la charge P2 sur la deuxième roue 2b principale (roue située à un niveau supérieur), et envoie un ordre d'alimentation (signal électrique de commande) à l'unité de commande 3 (aux distributeurs 30, 31) pour que celle-ci (ceux-ci) commande l'alimentation en fluide sous pression des vérins principaux 7a, 7b, et le cas échéant des vérins secondaires 8a, 8b, des deux sections latérales 1a, 1b de sorte à bloquer ou limiter la vitesse de dépliage/pliage de la deuxième section latérale 1b et à permettre le dépliage/pliage de la première section latérale 1a.

Grâce à la présente invention, la comparaison au moyen du bloc de contrôle 4 des informations données par les capteurs 5a, 5b présents au niveau de la première roue 2a principale et au niveau de la deuxième roue 2b principale permet de s'affranchir du référentiel, donc du sol S, sur lequel repose la machine agricole. Dès la détection d'une variation de charge sur l'une des roues 2a, 2b principales, l'unité de commande 3 est en mesure de limiter ou de bloquer le dépliage/pliage d'une section latérale 1a, 1b pour prévenir tout risque de basculement de la machine agricole. Le bloc de contrôle 4 est configurée pour commander l'unité de commande 3 de manière à déplier la section latérale 1a, 1b du côté de la roue 2a, 2b principale où la charge détectée est moindre et à bloquer la section latérale 1a, 1b du côté de la roue 2a, 2b principale où la charge détectée est supérieure. De cette manière, le risque de basculement de la machine agricole est écarté lors des manœuvres de pliage et/ou dépliage des sections latérales 1a, 1b.

Elle a également pour objet un procédé de contrôle d'une telle machine agricole selon la présente invention. On comprend que la machine agricole selon la présente invention permet la mise en œuvre du procédé selon la présente invention.

Conformément à la présente invention le procédé consiste :
- avant ou durant une commande de dépliage/pliage, à mesurer, au moyen du système de mesure, la charge sur la première roue 2a principale (ou le cas échéant sur au moins l'une des premières roues 2a principales) pour obtenir au moins une première mesure et la charge sur la deuxième roue 2b principale (ou le cas échéant sur au moins l'une des premières roues 2a principales) pour obtenir au moins une deuxième mesure,
- à comparer, au moyen du bloc de contrôle 4, la première mesure avec la deuxième mesure, puis, en fonction du résultat de la comparaison, à contrôler l'unité de commande 3 de sorte à permettre la commande de dépliage/pliage de l'une et/ou l'autre des sections latérales 1a, 1b et/ou à bloquer la commande de, ou à limiter la vitesse de, dépliage/pliage de l'une et/ou l'autre des sections latérales 1a, 1b.

Un procédé consiste, au moyen du bloc de contrôle 4 à déterminer la différence entre la première mesure et la deuxième mesure et :
- dans le cas où la différence est identique ou inférieure à une valeur seuil, à contrôler l'unité de commande 3 de sorte à permettre le dépliage/pliage (ou dit autrement : la commande de dépliage/pliage) des deux sections latérales 1a, 1b,
- dans le cas où la différence est supérieure à la valeur seuil, à contrôler l'unité de commande 3 de sorte à permettre le dépliage/pliage (ou dit autrement : la commande de dépliage/pliage) de la section latérale 1a, 1b située du côté de la roue 2a, 2b principale sur laquelle la charge P1, P2 mesurée est la plus faible et à bloquer le, ou à limiter la vitesse de, dépliage/pliage de la section latérale 1a, 1b située du côté de la roue 2a, 2b principale sur laquelle la charge P1, P2 mesurée est la plus importante.

On comprend que dans le cas où la différence est supérieure à une valeur seuil et que seule l'une des deux sections latérales 1a, 1b est dépliée/pliée, le bloc de contrôle 4 continue de recevoir les mesures et lorsque la différence mesurée sera identique ou inférieure à la valeur seuil, c'est à dire lorsque la section latérale 1a, 1b en cours de dépliage/pliage atteint un certain angle de pivotement, le bloc de contrôle 4 commandera l'unité de commande 3 de sorte à engager le dépliage/pliage de l'autre section latérale 1a, 1b. Ainsi les deux sections latérales 1a, 1b peuvent être pliées/dépliées sans risque de basculement de la machine agricole. D'une manière avantageuse, si la différence entre la première et la deuxième mesure est supérieure à 10%, l'unité de commande 3 va permettre de contrôler la séquence de dépliage/pliage des sections latérales 1a, 1b afin d'éviter le risque de basculement de la machine agricole.

De préférence, le procédé peut consister en ce que chaque mesure soit réalisée en un point situé sur l'axe transversal 20 à proximité du moyeu 21 de la première ou deuxième roue 2a, 2b principale correspondante ou en un point situé sur le moyeu 21 de la première ou deuxième roue 2a, 2b principale correspondante.

Dans le cas où chaque section latérale 1a, 1b comprend une section médiane 10a, 10b et une section d'extrémité 11a, 11b, le procédé peut consister, au moyen du bloc de contrôle 4, en fonction du résultat de la comparaison, à commander le dépliage/pliage des sections d'extrémité 11a, 11b en décalé par rapport aux sections médianes 10a, 10b respectives ou en même temps que ces dernières.

Ainsi, la présente invention, c'est-à-dire le procédé ou la machine agricole permettant sa mise en œuvre, permet, en fonction du résultat d'une comparaison de mesure de charge P1 , P2 sur les roues 2a, 2b principales de la machine agricole d'envoyer une commande adéquate du pliage/dépliage de chaque section latérale 1a, 1b pour s'affranchir de tout risque de basculement de la machine agricole et donc de proposer une machine agricole d'une grande stabilité lors des manœuvres de dépliage/pliage quel que soit le référentiel sur lequel s'appuient les roues 2a, 2b principales.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention tel que défini dans les revendications ci-jointes.

## Revendications

1. Procédé de contrôle d'une machine agricole, la machine agricole comprenant, d'une part, au moins deux sections latérales (1a, 1b) pliables dans une position de transport et dépliables dans une position de travail, au moins deux roues (2a, 2b) principales, à savoir au moins une première roue (2a) principale située du côté de l'une des sections latérales (1a) et au moins une deuxième roue (2b) principale située du côté de l'autre section latérale (1b) et une unité de commande (3) pour commander le dépliage/pliage de chaque section latérale (1a, 1b) et, d'autre part, un dispositif de contrôle du dépliage/pliage comprenant, un bloc de contrôle (4) pour contrôler l'unité de commande (3) et un système de mesure relié au bloc de contrôle (4) et permettant de mesurer la charge (P1 , P2) sur les au moins deux roues (2a, 2b) principales, **caractérisé en ce qu'**il consiste :
- avant ou durant une commande de dépliage/pliage, à mesurer, au moyen du système de mesure, la charge (P1) sur la première roue (2a) principale pour obtenir au moins une première mesure et la charge (P2) sur la deuxième roue (2b) principale pour obtenir au moins une deuxième mesure,
- à comparer, au moyen du bloc de contrôle (4), la première mesure avec la deuxième mesure, puis, en fonction du résultat de la comparaison, à contrôler l'unité de commande (3) de sorte à permettre le dépliage/pliage de l'une et/ou l'autre des sections latérales (1a, 1b) et/ou à bloquer le, ou limiter la vitesse de, dépliage/pliage de l'une et/ou l'autre des sections latérales (1a, 1b) pour éviter un risque de basculement de la machine agricole.

2. Procédé selon la revendication 1, **caractérisé en ce qu'**il consiste, au moyen du bloc de contrôle (4), à déterminer la différence entre la première mesure et la deuxième mesure et :
- dans le cas où la différence est identique ou inférieure à une valeur seuil, à contrôler l'unité de commande (3) de sorte à permettre le dépliage/pliage des deux sections latérales (1a, 1b),
- dans le cas où la différence est supérieure à une valeur seuil, à contrôler l'unité de commande (3) de sorte à permettre le dépliage/pliage de la section latérale (1a, 1b) située du côté de la roue (2a, 2b) principale sur laquelle la charge (P1, P2) mesurée est la plus faible et à bloquer le, ou limiter la vitesse de, dépliage/pliage de la section latérale (1a, 1b) située du côté de la roue (2a, 2b) principale sur laquelle la charge (P1, P2) mesurée est la plus importante.

3. Procédé selon l'une quelconque des revendications 1 à 2, **caractérisé en ce que** la machine agricole comprend au moins un essieu comportant un axe transversal (20) et au moins deux roues (2a, 2b) principales, à savoir la première roue (2a) principale et la deuxième roue (2b) principale, comportant chacune un moyeu (21) et **en ce que** chaque mesure est réalisée en un point situé sur l'axe transversal (20) à proximité du moyeu (21) de la première ou deuxième roue (2a, 2b) principale correspondante ou en un point situé sur le moyeu (21) de la première ou deuxième roue (2a, 2b) principale correspondante.

4. Procédé selon l'une quelconque des revendications 1 à 3, **caractérisé en ce que** chaque section latérale (1a, 1b) comprend une section médiane (10a, 10b) et une section d'extrémité (11a, 11b) et **en ce qu'**il consiste, au moyen du bloc de contrôle (4), en fonction du résultat de la comparaison, à commander le dépliage/pliage des sections d'extrémité (11a, 11b) en décalé par rapport aux sections médianes (10a, 10b) respectives ou en même temps que les sections médianes (10a, 10b).

5. Machine agricole comprenant au moins deux sections latérales (1a, 1b) pliables dans une position de transport et dépliables dans une position de travail, au moins deux roues (2a, 2b) principales, à savoir au moins une première roue (2a) principale située du côté de l'une des sections latérales (1a) et au moins une deuxième roue (2b) principale située du côté de l'autre section latérale (1b) et une unité de commande (3) pour commander le dépliage/pliage de chaque section latérale (1a, 1b), **caractérisée en ce qu'**elle comprend en outre un dispositif de contrôle du dépliage/pliage comprenant un bloc de contrôle (4) pour contrôler l'unité de commande (3) et un système de mesure relié au bloc de contrôle (4) et permettant de mesurer la charge (P1, P2) sur les au moins deux roues (2a, 2b) principales, à savoir sur la première roue (2a) principale pour obtenir une première mesure et sur la deuxième roue (2b) principale pour obtenir au moins une deuxième mesure et **en ce que** le bloc de contrôle (4) est configuré pour pouvoir comparer la première mesure avec la deuxième mesure et, en fonction du résultat de la comparaison, pour pouvoir contrôler l'unité de commande (3) de sorte à permettre le dépliage/pliage de l'une et/ou l'autre des sections latérales (1a, 1b) et/ou à bloquer le, ou limiter la vitesse de, dépliage/pliage de l'une et/ou l'autre des sections latérales (1a, 1b) pour éviter un risque de basculement de la machine agricole.

6. Machine agricole selon la revendication 5, **caractérisée en ce que** le bloc de contrôle (4) est configurée pour déterminer la différence entre la première mesure et la deuxième mesure et :
- dans le cas où la différence est identique ou inférieure à une valeur seuil, pour contrôler l'unité de commande (3) de sorte à permettre le dépliage/pliage des deux sections latérales (1a, 1b),
- dans le cas où la différence est supérieure à une valeur seuil, pour contrôler l'unité de commande (3) de sorte à permettre le dépliage/pliage de la section latérale (1a, 1b) située du côté de la roue (2a, 2b) principale sur laquelle la charge (P1, P2) mesurée est la plus faible et à bloquer le, ou limiter la vitesse de, dépliage/pliage de la section latérale (1a, 1b) située du côté de la roue (2a, 2b) principale sur laquelle la charge (P1, P2) mesurée est la plus importante.

7. Machine agricole selon l'une quelconque des revendications 5 à 6, **caractérisée en ce que** le système de mesure comprend au moins deux capteurs (5a, 5b) de mesure, à savoir un premier capteur (5a) apte et destiné à mesurer la charge (P1) sur la première roue (2a) principale et au moins un deuxième capteur (5b) apte et destiné à mesurer la charge (P2) sur la deuxième roue (2b) principale, de préférence chaque capteur (5a, 5b) est un capteur de force, plus préférentiellement un capteur de force comportant au moins une jauge de contrainte.

8. Machine agricole selon la revendication 7, **caractérisée en ce qu'**elle comprend au moins un essieu comportant un axe transversal (20) et les au moins deux roues (2a, 2b) principales, à savoir la première roue (2a) principale et la deuxième roue (2b) principale, comportant chacune un moyeu (21) et **en ce que** chaque capteur (5a) de mesure est situé sur l'axe transversal (20) à proximité du moyeu (21) de la première ou deuxième roue (2a, 2b) principale correspondante ou en un point situé sur le moyeu (21) de la première ou deuxième roue (2a, 2b) principale correspondante.

9. Machine agricole selon la revendication 8, **caractérisée en ce qu'**elle comprend au moins un boggie comportant au moins deux essieux reliés entre eux par des éléments de liaison et **en ce que** chaque capteur (5a, 5b) de mesure est disposé sur l'un des éléments de liaison.

10. Machine agricole selon l'une quelconque des revendications 5 à 9, **caractérisée en ce que** chaque section latérale (1a, 1b) comprend une section médiane (10a, 10b) et une section d'extrémité (11a, 11b) et **en ce qu'**il consiste, au moyen du bloc de contrôle (4), en fonction du résultat de la comparaison, à commander le dépliage/pliage des sections d'extrémité (11a, 11b) en décalé par rapport aux sections médianes (10a, 10b) ou en même temps que les sections médianes (10a, 10b).

## Patentansprüche

1. Verfahren zur Steuerung einer landwirtschaftlichen Maschine, wobei die landwirtschaftliche Maschine einerseits mindestens zwei Seitenteile (1a, 1b), die in eine Transportstellung einklappbar und in eine Arbeitsstellung ausklappbar sind, sowie mindestens zwei Haupträder (2a, 2b) umfasst, nämlich mindestens ein erstes Hauptrad (2a), das sich auf der Seite eines der Seitenteile (1a) befindet, und mindestens ein zweites Hauptrad (2b), das sich auf der Seite des anderen Seitenteils (1b) befindet, sowie eine Steuereinheit (3) zur Steuerung des Aus- und Einklappens jedes Seitenteils (1a, 1b) und andererseits eine Vorrichtung zur Kontrolle des Aus- und Einklappens, bestehend aus einem Steuerblock (4) zur Steuerung der Steuereinheit (3) und einem mit dem Steuerblock (4) verbundenen Messsystem, das die Messung der Belastung (P1, P2) an den mindestens zwei Haupträdern (2a, 2b) ermöglicht, **dadurch gekennzeichnet, dass** es darin besteht:
- vor oder während eines Aus- oder Einklappbefehls mittels des Messsystems die Belastung (P1) am ersten Hauptrad (2a) zu messen, um mindestens einen ersten Messwert zu erhalten, sowie die Belastung (P2) am zweiten Hauptrad (2b) zu messen, um mindestens einen zweiten Messwert zu erhalten,
- mittels des Steuerblocks (4) den ersten Messwert mit dem zweiten Messwert zu vergleichen und anschließend, abhängig vom Ergebnis des Vergleichs, die Steuereinheit (3) so zu steuern, dass das Aus- bzw. Einklappen des einen und/oder des anderen Seitenteils (1a, 1b) ermöglicht wird und/oder das Aus- bzw. Einklappen des einen und/oder des anderen Seitenteils (1a, 1b) blockiert oder dessen Geschwindigkeit begrenzt wird, um eine Kippgefahr der landwirtschaftlichen Maschine zu vermeiden.

2. Verfahren nach Anspruch 1, **dadurch gekennzeichnet, dass** es darin besteht, mittels des Steuerblocks (4) die Abweichung zwischen dem ersten Messwert und dem zweiten Messwert zu ermitteln und:
- falls die Abweichung gleich oder kleiner als ein Schwellenwert ist, die Steuereinheit (3) so zu steuern, dass das Aus- bzw. Einklappen der beiden Seitenteile (1a, 1b) ermöglicht wird,
- falls die Abweichung größer als ein Schwellenwert ist, die Steuereinheit (3) so zu steuern, dass das Aus- bzw. Einklappen des Seitenteils (1a, 1b) ermöglicht wird, das sich auf der Seite des Hauptrads (2a, 2b) befindet, an dem die gemessene Belastung (P1, P2) am geringsten ist, und das Aus- bzw. Einklappen des Seitenteils (1a, 1b) auf der Seite des Hauptrads (2a, 2b), an dem die gemessene Belastung (P1, P2) am größten ist, zu blockieren oder dessen Geschwindigkeit zu begrenzen.

3. Verfahren nach einem der Ansprüche 1 bis 2, **dadurch gekennzeichnet, dass** die landwirtschaftliche Maschine mindestens eine Achse mit einer Querachse (20) und mindestens zwei Haupträder (2a, 2b), nämlich das erste Hauptrad (2a) und das zweite Hauptrad (2b), umfasst, die jeweils eine Nabe (21) aufweist, und dass jede Messung an einem Punkt auf der Querachse (20) in der Nähe der Nabe (21) des entsprechenden ersten oder zweiten Hauptrads (2a, 2b) oder an einem Punkt auf der Nabe (21) des entsprechenden ersten oder zweiten Hauptrads (2a, 2b) durchgeführt wird.

4. Verfahren nach einem der Ansprüche 1 bis 3, **dadurch gekennzeichnet, dass** jeder Seitenteil (1a, 1b) einen Mittelteil (10a, 10b) und einen Endteil (11a, 11b) umfasst und dass es darin besteht, mittels dem Steuerblock (4) je nach Ergebnis des Vergleichs das Aus- bzw. Einklappen des Endteils (11a, 11b) zeitversetzt zu den jeweiligen Mittelteilen (10a, 10b) oder gleichzeitig mit den Mittelteilen (10a, 10b) zu steuern.

5. Landwirtschaftliche Maschine mit mindestens zwei Seitenteilen (1a, 1b) umfasst, die in eine Transportstellung einklappbar und in eine Arbeitsstellung ausklappbar sind, sowie mindestens zwei Haupträder (2a, 2b), nämlich mindestens ein erstes Hauptrad (2a) auf der Seite eines der Seitenteile (1a) und mindestens ein zweites Hauptrad (2b) auf der Seite des anderen Seitenteils (1b), sowie eine Steuereinheit (3) zur Steuerung des Aus- und Einklappens jedes Seitenteils (1a, 1b), **dadurch gekennzeichnet, dass** sie ferner eine Vorrichtung zur Kontrolle des Aus- und Einklappens umfasst, die einen Steuerblock (4) zur Steuerung der Steuereinheit (3) und ein mit dem Steuerblock (4) verbundenes Messsystem umfasst ein Messsystem, das ermöglicht, die Belastung (P1, P2) an den mindestens zwei Haupträdern (2a, 2b) zu messen, nämlich am ersten Hauptrad (2a), um einen ersten Messwert zu erhalten, und am zweiten Hauptrad (2b), um mindestens einen zweiten Messwert zu erhalten, und dass der Steuerblock (4) so ausgelegt ist, dass er den ersten Messwert mit dem zweiten Messwert vergleichen kann und in Abhängigkeit vom Ergebnis des Vergleichs die Steuereinheit (3) so anzusteuern, dass das Aus- bzw. Einklappen des einen und/oder des anderen Seitenteils (1a, 1b) ermöglicht wird und/oder das Aus- bzw. Einklappen des einen und/oder des anderen Seitenteils (1a, 1b) blockiert bzw. dessen Geschwindigkeit begrenzt wird, um eine Kippgefahr der landwirtschaftlichen Maschine zu vermeiden.

6. Landwirtschaftliche Maschine nach Anspruch 5, **dadurch gekennzeichnet, dass** der Steuerblock (4) so ausgelegt ist, dass er die Abweichung zwischen dem ersten Messwert und dem zweiten Messwert ermittelt und:
- falls die Abweichung gleich oder kleiner als ein Schwellenwert ist, die Steuereinheit (3) so zu steuern, dass das Aus- bzw. Einklappen der beiden Seitenteile (1a, 1b) ermöglicht wird,
- falls die Abweichung größer als ein Schwellenwert ist, die Steuereinheit (3) so zu steuern, dass das Aus- bzw. Einklappen des Seitenteils (1a, 1b) ermöglicht wird, das sich auf der Seite des Hauptrads (2a, 2b) befindet, an dem die gemessene Belastung (P1, P2) am geringsten ist, und das Aus- bzw. Einklappen des Seitenteils (1a, 1b) auf der Seite des Hauptrads (2a, 2b), an dem die gemessene Belastung (P1, P2) am größten ist, zu blockieren oder dessen Geschwindigkeit zu begrenzen.

7. Landwirtschaftliche Maschine nach einem der Ansprüche 5 bis 6, **dadurch gekennzeichnet, dass** das Messsystem mindestens zwei Messsensoren (5a, 5b) umfasst, nämlich einen ersten Sensor (5a), der dazu ausgelegt und bestimmt ist, die Belastung (P1) am ersten Hauptrad (2a) zu messen, und mindestens einen zweiten Sensor (5b), der dazu geeignet und bestimmt ist, die Belastung (P2) am zweiten Hauptrad (2b) zu messen, wobei vorzugsweise jeder Sensor (5a, 5b) ein Kraftsensor ist, noch bevorzugter ein Kraftsensor mit mindestens einem Dehnungsmessstreifen.

8. Landwirtschaftliche Maschine nach Anspruch 7, **dadurch gekennzeichnet, dass** sie mindestens eine Achse mit einer Querachse (20) und mindestens zwei Haupträder (2a, 2b), nämlich das erste Hauptrad (2a) und das zweite Hauptrad (2b), umfasst, die jeweils eine Nabe (21) aufweist, und dass sich jeder Messsensor (5a) auf der Querachse (20) in der Nähe der Nabe (21) des entsprechenden ersten oder zweiten Hauptrads (2a, 2b) oder an einem Punkt auf der Nabe (21) des entsprechenden ersten oder zweiten Hauptrads (2a, 2b) befindet.

9. Landwirtschaftliche Maschine nach Anspruch 8, **dadurch gekennzeichnet, dass** sie mindestens ein Tandemaggregat mit mindestens zwei Achsen umfasst, die durch Verbindungselemente miteinander verbunden sind, und dass jeder Messsensor (5a, 5b) an einem der Verbindungselemente angeordnet ist.

10. Landwirtschaftliche Maschine nach einem der Ansprüche 5 bis 9, **dadurch gekennzeichnet, dass** jeder Seitenteil (1a, 1b) einen Mittelteil (10a, 10b) und einen Endteil (11a, 11b) umfasst und darin besteht, mittels dem Steuerblock (4) je nach Ergebnis des Vergleichs das Aus- bzw. Einklappen des Endteils (11) zeitversetzt zu den Mittelteilen (10a, 10b) oder gleichzeitig mit den Mittelteilen (10a, 10b) zu steuern.

## Claims

1. Method for controlling an agricultural machine, wherein the agricultural machine comprises, on the one hand, two side sections (1a, 1b) that can be folded into a transport position and unfolded into a working position, at least two main wheels (2a, 2b), namely at least a first main wheel (2a) located on the side of one of the side sections (1a) and at least a second main wheel (2b) located on the side of the other side section (1b), and a control unit (3) for controlling the unfolding/folding of each side section, and, on the other hand, a unfolding/folding control device comprising a controller (4) for controlling the control unit (3) and a measuring system connected to the controller (4) and capable of measuring the load (P1, P2) on the at least two main wheels (2a, 2b), **characterised in that** it consists:
- before or during an unfolding/folding command, in measuring, using the measurement system, the load (P1) on the first main wheel (2a) to obtain at least a first measurement and the load (P2) on the second main wheel (2b) to obtain at least a second measurement,
- in comparing, using the controller (4), the first measurement with the second measurement, and then, based on the result of the comparison, to control the control unit (3) so as to allow the unfolding/folding of one or the other of the side sections (1a, 1b) and/or to block or limit the speed of unfolding/folding of one or the other of the side sections (1a, 1b) to prevent the risk of the agricultural machine tipping over.

2. Method according to claim 1, **characterised in that** it consists, by using the controller (4), to determine the difference between the first measurement and the second measurement and:
- where the difference is equal to or less than a threshold value, to control the control unit (3) so as to enable the unfolding/folding of the two side sections (1a, 1b),
- where the difference exceeds the threshold value, to control the control unit (3) so as to enable the unfolding/folding of the side section (1a, 1b) located on the side of the wheel (2a, 2b) on which the measured load (P1, P2) is lowest, and to block or limit the speed of the unfolding/folding of the side section (1a, 1b) situated on the side of the main wheel (2a, 2b) on which the measured load (P1, P2) is highest.

3. Method according to any one of claims 1 to 2, **characterised in that** the agricultural machine comprises an axle having a transverse shaft (20) and at least two main wheels (2a, 2b), namely the first main wheel (2a) and the second main wheel (2b), each comprising a hub (21) and **in that** each measurement is taken at a point situated on the transverse axis (20) near the hub (21) of the corresponding first or second main wheel (2a, 2b), or at a point situated on the hub (21) of the corresponding first or second main wheel (2a, 2b).

4. Method according to any one of claims 1 to 3, **characterised in that** each side section (1a, 1b) comprises a middle section (10a, 10b) and an end section (11a, 11b) and **in that** it consists, by means of the controller (4) and depending on the result of the comparison, in controlling the unfolding/folding of the end sections (11a, 11b) either out of phase with the respective middle sections (10a, 10b) or simultaneously with them.

5. Agricultural machine comprising at least two side sections (1a, 1b) that can be folded into a transport position and unfolded into a working position, at least two main wheels (2a, 2b), namely at least a first main wheel (2a) located on the side of one of the side sections (1a) and at least a second main wheel (2b) located on the side of the other side section (1b), and a control unit (3) for controlling the unfolding/folding of each side section (1a, 1b), **characterised in that** it further comprises a unfolding/folding control device comprising a controller (4) for controlling the control unit (3) and a measuring system connected to the controller (4) and capable of measuring the load P1, P2) on the at least two main wheels (2a, 2b), namely on the first main wheel (2a) to obtain at least a first measurement and on the second main wheel (2b) to obtain at least a second measurement, and **in that** the controller (4) is configured to compare the first measurement with the second measurement and, based on the result of the comparison, to control the control unit (3) so as to allow the unfolding/folding of one and/or the other of the side sections (1a, 1b) and/or to block or limit the speed of unfolding/folding of one and/or the other of the side sections (1a, 1b) to prevent the risk of the agricultural machine tipping over.

6. Agricultural machine according to claim 5, **characterised in that** the controller (4) is configured to determine the difference between the first measurement and the second measurement and:
- where the difference is equal to or less than a threshold value, to control the control unit (3) so as to enable the unfolding/folding of the two side sections (1a, 1b),
- where the difference exceeds a threshold value, to control the control unit (3) so as to enable the unfolding/folding of the side section (1a, 1b) located on the side of the main wheel (2a, 2b) on which the measured load (P1, P2) is lowest, and to block or limit the speed of the unfolding/folding of the side section (1a, 1b) situated on the side of the main wheel (2a, 2b) on which the measured load (P1, P2) is highest.

7. Agricultural machine according to any one of claims 5 to 6, **characterised in that** the measurement system comprises at least two measurement sensors (5a, 5b), namely at least a first sensor (5a) capable of and intended to measure the load (P1) on the first main wheel (2a) and at least a second sensor (5b) capable of and intended to measure the load (P2) on the second main wheel (2b), preferably each sensor (5a, 5b) is a force sensor, more preferably a force sensor comprising at least one strain gauge.

8. Agricultural machine according to claim 7, **characterised in that** it comprises at least one axle having a transverse shaft (20) and the at least two main wheels (2a, 2b), namely the first main wheel (2a) and the second main wheel (2b), each comprising a hub (21) and **in that** each measurement sensor (5a) is located on the transverse shaft (20) near the hub (21) of the corresponding first or second main wheel (2a, 2b)or at a point located on the hub (21) of the corresponding first or second main wheel (2a, 2b).

9. Agricultural machine according to claim 8, **characterised in that** it comprises at least one bogie comprising at least two axles connected to each other by connecting members, and **in that** each measurement sensor (5a, 5b) is mounted on one of the connecting members.

10. Agricultural machine according to any one of claims 5 to 9, **characterised in that** each side section (1a, 1b) comprises a middle section (10a, 10b) and an end section (11a, 11b) and **in that** it consists, by means of the controller (4), depending on the result of the comparison, in commanding the unfolding/folding of the end sections (11 a, 11) either out of phase with the respective middle sections (10a, 10b) or simultaneously with them.
